# EUROPÄISCHE PATENTSCHRIFT

(11) **EP 1 463 654 B1**
(45) Veröffentlichungstag und Bekanntmachung des Hinweises auf die Patenterteilung: **26.10.2005**
(21) Anmeldenummer: 03792156.6
(22) Anmeldetag: 23.01.2003
(51) Int. Cl.: B60R 13/10, H05B 33/26, G09F 13/22

(54) **SCHILD**
PLATE
PLAQUE

(30) Priorität: 20.08.2002 DE 10238054
(43) Veröffentlichungstag der Anmeldung: 06.10.2004
(73) Patentinhaber: FER Fahrzeugelektrik GmbH, 99819 Eisenach (DE)
(72) Erfinder: MOSER, Helmut, 76646 Bruchsal (DE)
(74) Vertreter: Strasser, Wolfgang
(86) Internationale Anmeldenummer: PCT/EP2003/000677
(87) Internationale Veröffentlichungsnummer: WO 2004/018260

(56) Entgegenhaltungen:
- US-A- 5 432 015
- US-A- 5 552 679

## Beschreibung

Die Erfindung betrifft ein Schild, insbesondere Kraftfahrzeug-Kennzeichenschild, gemäß dem Oberbegriff von Anspruch 1.

Ein derartiges Schild ist beispielsweise aus dem deutschen Gebrauchsmuster 299 11 348.5 bekannt. Dort wird ein mit einem Elektrolumineszenzaufbau beschichtetes Metallschild beschrieben, das nicht nur Träger sondern gleichzeitig auch Basiselektrode des Elektrolumineszenzaufbaus ist.

Dies ergibt zwar eine sehr einfache Struktur, hat aber mehrere Nachteile.

Zum einen ist eine derartige Anordnung nicht für Schilder verwendbar, bei denen der Träger aus einem nicht-leitenden Kunststoff besteht.

Weiterhin ist es problematisch, die auf der Oberseite des Elektrolumineszenzaufbaus befindliche, äußerst dünne, transparente Deckelektrode in zuverlässiger Weise elektrisch zu kontaktieren. Der über einen Elektrolumineszenz-Flachkondensator fließende Wechselstrom ist um so größer, je größer die von diesem Flachkondensator bedeckte Fläche ist. Bei der Größe eines Kraftfahrzeug-Kennzeichenschildes bereitet es erhebliche Schwierigkeiten, den erforderlichen Strom in die extrem dünne Deckelektrode so einzuspeisen, daß keine zu großen Stromdichten entstehen, die zu einem lokalen Durchbrennen oder Abdampfen dieser Deckelektrode führen können. Darüber hinaus muß darauf geachtet werden, daß bei der Kontaktierung die Deckelektrode und die unter ihr liegenden Dielektrikumsschichten nicht durchstoßen werden, was zu einem Kurzschluß und damit Funktionsausfall des Elektrolumineszenz-Flachkondensators führen würde.

Weiterhin ist die gesamte Anordnung extremen Umwelteinflüssen mit hoher mechanischer und chemischer Belastung (starke Vibrationen, korrodierende Umgebung, hohe Feuchtigkeit, usw.) ausgesetzt. Dies gilt insbesondere auch für die Stromanschlüsse der beiden Elektroden des Elektrolumineszenz-Flachkondensators, an denen keine hohen und/oder sich zunehmend verschlechternde Übergangswiderstände auftreten dürfen.

Weiter aus der US 5 552 679 A1 ist ein Elektrolumineszenzschild gemäß dem Oberbegriff des Anspruchs 1 bekannt. Um eine elektrische Verbindung mit der Basis- und Deckelektrode aufzunehmen, werden leitfähige Verbinders mit durchdringenden Zähnen nach der Fertigung des Schilds eingesetzt.

Somit liegt der Erfindung die Aufgabe zugrunde, ein Schild der eingangs genannten Art zu schaffen, bei dessen Herstellung wahlweise ein Träger aus Metall oder Kunststoff verwendet werden kann und bei dem in jedem Fall eine einfache und zuverlässige Kontaktierung der Elektroden des Flachkondensators, insbesondere der dünnen Deckelektrode gewährleistet ist.

Zur Lösung dieser Aufgabe sieht die Erfindung die im Anspruch 1 zusammengefaßten Merkmale vor. Diesen Maßnahmen liegt die Überlegung zugrunde, daß es vorteilhaft ist, auf die Verwendung des Trägers als Basiselektrode zu verzichten. Dadurch wird zwar die aus dem genannten Stand der Technik bekannte Strukturvereinfachung aufgegeben gleichzeitig aber auch eine Reihe von Vorteilen gewonnen.

Ein erster dieser Vorteile besteht darin, daß es auf die elektrische Leitfähigkeit des Trägers nicht mehr ankommt, so daß bei der Herstellung eines derartigen Schildes wahlweise und auf den jeweiligen Verwendungsfall abgestimmt, entweder ein Metallträger oder ein Kunststoffträger verwendet werden kann.

Ein weiterer wichtiger Vorteil besteht darin, daß aus der elektrisch leitenden Schicht, die zunächst die weitere Isolationsschicht ganzflächig bedeckt, nicht nur eine oder mehrere Basiselektroden eines oder mehrerer Flachkondensatoren sondern auch zumindest eine Einspeisleitung jeweils elektrisch voneinander isoliert herausgearbeitet werden können, wobei letztere bei fertiggestelltem Schichtaufbau von der dünnen Deckelektrode von oben her so überdeckt wird, daß ein elektrisch gut leitender Kontakt besteht. Die Einspeisleitung kann nahezu um den gesamten Umfangsrand der Basiselektrodenanordnung herum gezogen werden, so daß sich ein langgestreckter schmaler Leiterstreifen ergibt, über den der durch die Flachkondensatoranordnung fließende Strom mit einer hinreichend geringen Stromdichte in die Deckelektrode eingespeist werden kann, ohne daß die Gefahr einer Beschädigung besteht.

Besonders bevorzugt ist es, als weitere Isolationsschicht eine Kunststoffolie zu verwenden, die gut haftend auf den Träger aufgebracht ist und auf ihrer vom Träger abgewandten Seite die elektrisch leitende Schicht beispielsweise in Form einer Kupferbeschichtung trägt, aus der durch bekannte Ätzverfahren die gewünschten Leitbahnstrukturen herausgearbeitet werden können.

Vorzugsweise weist diese Kunststoffolie zumindest eine über den Rand des Trägers überstehende Lasche auf, auf der die Anschlußleitbahnen für die Basiselektrodenanordnung und die Einspeisleitung ausgebildet sind. Diese Lasche kann im montierten Zustand auf die Rückseite des Trägers umgeklappt und dort mit einem der bekannten Verfahren kontaktiert werden.

Von besonderer Bedeutung ist weiterhin, daß sowohl die elektrisch leitende Schicht, aus der die Basiselektrodenanordnung und die Einspeisleitung herausgearbeitet sind, als auch die äußerst dünne Deckelektrode ohne weiteres in der Lage sind, eine nachträgliche mechanische, beispielsweise durch einen Prägevorgang erfolgende Verformung des zunächst flachen Trägers mitzumachen, ohne daß eine Beeinträchtigung der Funktionstüchtigkeit der Elektrolumineszenzanordnung entsteht.

Insbesondere können in den Träger von hinten her Vertiefungen eingeprägt werden, die dazu führen, daß auf seiner dem Betrachter zugewandten Seite Erhöhungen entstehen, die beispielsweise die Form von darzustellenden Symbolen besitzen und mit einer für das Licht der Elektrolumineszenzanordnung undurchlässigen Farbe abgedeckt werden, so daß die so gebildeten Symbole dunkel vor einem leuchtenden Hintergrund erscheinen.

Die gesamte Anordnung kann mit einer weiteren Folie abgedeckt werden, die an den Rändern mit dem Träger feuchtigkeitsdicht verbunden ist und die Elektrolumineszenzstrukturen gegen Feuchtigkeit und mechanische Beschädigungen schützt.

Vorteilhafterweise kann diese Schutzabdeckung auch retroreflektierende Bestandteile enthalten, so daß ein derart ausgerüstetes Schild dann, wenn die Elektrolumineszenzanordnung abgeschaltet ist, im auffallenden Fremdlicht ein hohes Reflexionsvermögen besitzt.

Diese und weitere vorteilhafte Ausgestaltungen eines erfindungsgemäßen Schildes sind in den Unteransprüchen niedergelegt.

Die Erfindung wird im folgenden anhand eines Ausführungsbeispiels unter Bezugnahme auf die Zeichnung beschrieben; in dieser zeigt
- Fig. 1: in stark schematisierter Weise einen typischen Schichtaufbau für ein selbstleuchtendes Schild gemäß der Erfindung, und
- Fig. 2: eine schematische Draufsicht auf ein diesen Schichtaufbau besitzendes Kraftfahrzeug-Kennzeichenschild.

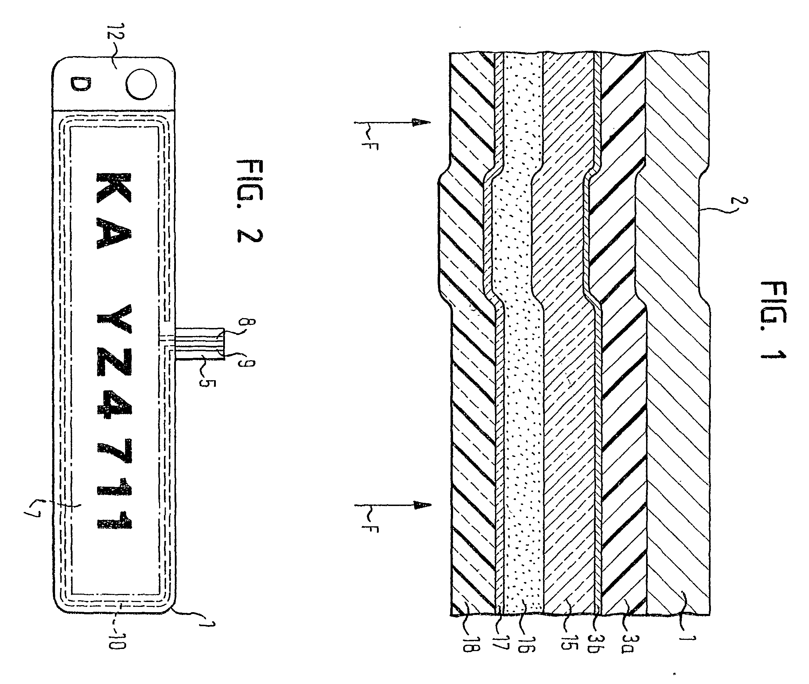

In Fig. 1, in der die Pfeile F die Hauptblickrichtung des Betrachters wiedergeben, sind die einzelnen Schichten in stark vergrößertem Maßstab dargestellt, wobei der Deutlichkeit halber einzelne der Schichten, die in Wirklichkeit besonders dünn sind, stark vergrößert wiedergegeben wurden.

In Blickrichtung F "hinten", d.h. am weitesten vom Betrachter entfernt, befindet sich der verformbare Träger 1, der aus einer durch einen mechanischen Prägevorgang verformbaren Metall- oder Kunststoffplatte bestehen kann. In dem wiedergegebenen Ausschnitt weist der Träger 1 eine von hinten her eingeprägte Vertiefung 2 auf, die dazu führt, daß auf seiner dem Betrachter zugewandten Vorderseite eine entsprechende Erhebung vorhanden ist. Es sei besonders darauf hingewiesen, daß die Verformung des Trägers 1, die zu dieser Vertiefung 2 und weiteren Vertiefungen und/oder Erhebungen führt, nicht vor dem Aufbringen der im nachfolgenden im einzelnen beschriebenen Schichtstruktur erfolgen muß. Vielmehr ist es möglich, den Träger 1 mit der kompletten Schichtstruktur als "Rohling" fertig auszubilden, der dann nachträglich in beliebiger Weise mechanisch geprägt und/oder auf sonstige Weise verformt werden kann.

Dies ist insbesondere bei der Herstellung von Kraftfahrzeug-Kennzeichenschildern von Bedeutung, bei denen zunächst derartige Rohlinge in großen Stückzahlen von speziellen Herstellern gefertigt und an die "Schildermacher" verkauft werden, bei denen im Kundenauftrag nach Zuteilung eines konkreten Kraftfahrzeugkennzeichens dieses in den Rohling von hinten her eingeprägt wird, wobei die auf der Vorderseite entstehenden erhabenen Bereiche schwarz eingefärbt werden. Das in der vorliegenden Anmeldung beschriebene Schild ist für diesen Verfahrensablauf ohne weiteres geeignet.

Auf den Träger 1 ist ganzflächig eine isolierende Kunststoffolie 3a aufgebracht, die auf ihrer dem Betrachter zugewandten Vorderseite zunächst ganzflächig mit einer Schicht 3b aus elektrisch gut leitendem Material, beispielsweise Kupfer, versehen ist.

Wie man insbesondere der Fig. 2 entnehmen kann, besitzt diese Kunststoffolie 3a eine über die Kontur des Trägers 1 vorstehende, in Fig. 2 stark vergrößert wiedergegebene Lasche 5, die zunächst ebenfalls flächendeckend mit dem elektrisch leitenden Material 3b beschichtet ist.

Aus dieser elektrisch leitenden Beschichtung sind zwei voneinander getrennte und elektrisch isolierte Flächenbereiche herausgearbeitet, die in Fig. 2 durch gestrichelte bzw. strichpunktierte Linien dargestellt sind.

Der eine der beiden Flächenbereiche bildet eine Basiselektrode 7, die nahezu die gesamte Vorderfläche des Trägers 1 bedeckt und die Größe und Form der im Betrieb der fertiggestellten Struktur leuchtenden Fläche definiert. Wie man sieht, ist diese Basiselektrode 7 mit einem auf der Lasche 5 ausgebildeten Anschlußleiter 8 unmittelbar elektrisch leitend verbunden.

Um die Basiselektrode 7 herum verläuft eine mit dem Anschlußleiter 9 verbundene Einspeisleitung 10, die, wie weiter unten noch genauer erläutert wird, zur Stromversorgung der transparenten Deckelektrode des die Elektrolumineszenzstruktur bildenden Flachkondensators dient.

Sowohl die Breite der Einspeiselektrode 10 als auch ihre Abstände zum Rand des Trägers 1 einerseits und zum Rand der Basiselektrode 7 andererseits sind in Fig. 2 der Deutlichkeit halber stark vergrößert wiedergegeben. In der Praxis kann sich der Rand der Basiselektrode 7 wesentlich weiter bis zum Rand des Trägers 1 erstrecken, so daß nahezu dessen gesamte, dem Betrachter zugewandte Frontfläche leuchtet.

Eine Ausnahme hiervon bildet lediglich der in Fig. 2 ganz links dargestellte Bereich 12, bei dem es sich um den bei den Europa-Kennzeichenschildern vorgesehenen blauen Bereich mit Sternenkranz und Nationalitätskennzeichen handelt.

Erfindungsgemäß ist es ohne weiteres möglich, auch diesen Bereich leuchtend zu gestalten.

In diesem Fall wird dann die Basiselektrode 7 entsprechend weit nach links ausgedehnt, wobei immer noch ein schmaler Rand verbleibt, so daß sich die Einspeisleitung 10 um die Basiselektrode 7 herum erstrecken kann.

Wie man weiterhin der Fig. 1 entnimmt, ist die elektrisch leitende Beschichtung 3b vollständig mit einer Isolationsschicht 15 abgedeckt, die einen Hauptteil des Dielektrikums des auszubildenden Flachkondensators bildet und vorzugsweise mit einem weißen Pigment eingefärbt ist, das zwar selbst nicht leuchtet aber das von der sie überdeckenden Pigmentschicht 16 im Betrieb erzeugte Licht zum Betrachter hin reflektiert und somit für eine deutliche Helligkeitsverbesserung sorgt.

Die Isolationsschicht 15 kann bei der Herstellung des Rohlings zur Ausbildung der Ätzmaske verwendet werden, welche die Flächenbereiche 7, 8, 9, 10 der elektrisch leitenden Beschichtung 3b der Kunststoffolie 3a abdeckt, so daß bei einem Ätzschritt nur die dazwischen frei bleibenden Zwischenräume herausgeätzt und somit die Flächenbereiche 7 und 8 einerseits und 9 und 10 andererseits elektrisch voneinander isoliert werden.

Die Pigmentschicht 16 bedeckt demgegenüber vorzugsweise nur den Flächenbereich der Basiselektrode 7, da ja alle anderen Bereiche nicht leuchtend ausgebildet werden sollen.

Vor dem Aufbringen der äußerst dünnen, transparenten Deckelektrode 17 (siehe Fig. 1) wird der die Einspeisleitung 10 bedeckende Teil der Isolationsschicht 15 entfernt, damit die Deckelektrode 17 einen innigen, elektrisch gut leitenden Kontakt mit der Einspeisleitung 10 eingehen kann.

Sinn dieser Einspeisleitung ist es, den auf die Deckelektrode 17 fließenden Wechselstrom möglichst großflächig einzuspeisen, um die lokalen Stromdichten möglichst gering zu halten. Ansonsten würde aufgrund der extrem geringen Dicke der Deckelektrode 17 die Gefahr zumindest lokaler Beschädigungen durch Verbrennen oder Verdampfen aufgrund einer zu hohen Stromdichte bestehen.

Wie bereits angedeutet, bilden die Basiselektrode 7, die Isolationsschicht 15, die Pigmentschicht 16 und die transparente Deckelektrode 17 einen Flachkondensator, an den im Betrieb eine Wechselspannung beispielsweise in der Größenordnung 80 V bis 100 V und mit einer Frequenz in der Größenordnung 400 Hz angelegt werden kann, um die Pigmentschicht 16 zum Leuchten zu bringen.

Die gesamte Anordnung wird ganzflächig durch eine transparente Kunststoffolie 18 abgedeckt, die an den Außenrändern des Trägers mit diesem feuchtigkeitsdicht verbunden ist, um den Flachkondensator gegen Feuchtigkeit zu schützen, und die retroreflektierende Bestandteile enthalten kann.

Die in Fig. 2 nach oben abstehende Lasche 5 kann an jeder beliebigen anderen Stelle des Trägers vorgesehen sein. Sie wird im montierten Zustand nach hinten auf die Rückseite des Trägers 1. umgeklappt und kann dort durch Löten oder Crimpen oder ein anderes bekanntes Kontaktierungsverfahren mit weiterführenden Anschlußleitungen oder unmittelbar mit dem Ansteuergerät verbunden werden, das aus der Kraftfahrzeug-Bordgleichspannung die für den Betrieb des selbstleuchtenden Kennzeichenschildes erforderliche Wechselspannung erzeugt.

Prinzipiell ist es auch möglich, im linken Seitenbereich 12 einen gesonderten Flachkondensator auszubilden, dessen Basiselektrode von der Basiselektrode 7 getrennt ist, der aber mit dem anderen Flachkondensator eine gemeinsame Deckelektrode besitzen kann. Die Basiselektrode dieses weiteren Flachkondensators muß dann über eine eigene (nicht dargestellte) Anschlußleitung auf der Lasche 5 herausgeführt werden, so daß eine getrennte Ansteuerung möglich ist und jeder der beiden Bereiche gesondert ein- und ausgeschaltet werden kann.

Alternativ zu dem oben erläuterten Ausführungsbeispiel kann die Kunststoffolie 3a auch mehrere elektrisch leitende Beschichtungen tragen, die durch dazwischen liegende Isolationsschichten voneinander elektrisch isoliert sind und aus denen voneinander verschiedene elektrisch leitende Bereiche, insbesondere Verbindungsleitbahnen heraus gearbeitet sind, um es zu ermöglichen, auch mehr als zwei auf der Fläche des Kennzeichenschildes ausgebildete Flachkondensatoren, die in Blickrichtung F neben- oder hintereinander angeordnet sein können, voneinander getrennt anzusteuern.

## Patentansprüche

1. Schild, insbesondere Kraftfahrzeug-Kennzeichenschild, das einen Träger (1) aus einem plastisch verformbaren Material und einen Elektrolumineszenz-Schichtaufbau zur Bildung von wenigstens einem Flachkondensator umfaßt, der eine Basiselektrode (7), eine Isolationsschicht (15), eine im Betrieb leuchtende Pigmentschicht (16) und eine transparente Deckelektrode (17) aufweist, **dadurch gekennzeichnet, daß** auf den Träger (1) eine weitere Isolationsschicht (3a) aufgebracht ist, über der eine elektrisch leitende Schicht (3b) angeordnet ist, aus der die Basiselektrode (7) und wenigstens eine von dieser elektrisch getrennte Einspeisleitung (10) für die Deckelektrode (17) des wenigstens einen Flachkondensators herausgearbeitet sind.

2. Schild nach Anspruch 1, **dadurch gekennzeichnet, daß** die weitere Isolationsschicht (3a) eine auf der vom Träger (1) abgewandten Seite zunächst durchgehend mit einem elektrisch leitenden Material beschichtete Kunststoffolie ist.

3. Schild nach Anspruch 2, **dadurch gekennzeichnet, daß** die Kunststoffolie zumindest eine über den Träger (1) überstehende Lasche (5) aufweist, auf der die zur Kontaktierung der Basiselektrode (7) und der Einspeisleitung (10) erforderlichen Anschlußleitungen (8, 9) ausgebildet sind.

4. Schild nach Anspruch 3, **dadurch gekennzeichnet, daß** die Basiselektrode (7) und die von ihr elektrisch getrennte Einspeisleitung (10) des wenigstens einen Flachkondensators sowie die mit ihnen verbundenen Anschlußleitungen (8, 9) durch ein Ätzverfahren aus dem elektrisch leitenden Material herausgearbeitet sind.

5. Schild nach einem der vorhergehenden Ansprüche, **dadurch gekennzeichnet, daß** das elektrisch leitende Material Kupfer ist.

6. Schild nach einem der vorhergehenden Ansprüche, **dadurch gekennzeichnet, daß** der Träger (1) aus Metall besteht.

7. Schild nach einem der vorhergehenden Ansprüche, **dadurch gekennzeichnet, daß** der Elektrolumineszenz-Schichtaufbau mehrere Flachkondensatoren umfaßt.

8. Schild nach Anspruch 7, **dadurch gekennzeichnet, daß** wenigstens zwei der Flachkondensatoren voneinander unabhängig ansteuerbar sind.

9. Schild nach Anspruch 7 oder 8, **dadurch gekennzeichnet, daß** wenigstens zwei der Flachkondensatoren eine gemeinsame Deckelektrode (17) besitzen.

10. Schild nach Anspruch 8 oder 9, **dadurch gekennzeichnet, daß** wenigstens zwei Flachkondensatoren voneinander elektrisch getrennte Basiselektroden aufweisen mit deren Hilfe sie voneinander unabhängig ansteuerbar sind.

11. Schild nach einem der Ansprüche 7 bis 10, **dadurch gekennzeichnet, daß** für getrennte Deckelektroden von wenigstens zwei Flachkondensatoren, jeweils eine gesonderte Einspeisleitung vorgesehem ist.

12. Schild nach einem der Ansprüche 3 bis 11, **dadurch gekennzeichnet, daß** jede der Anschlußleitbahnen (8, 9) durch eine Lötverbindung mit einer Ader einer Stromversorgungsleitung verbunden ist.

13. Schild nach einem der Ansprüche 3 bis 11, **dadurch gekennzeichnet, daß** jede der Anschlußleitbahnen (8, 9) durch eine Crimpverbindung mit einer Ader einer Stromversorgungsleitung verbunden ist.

14. Schild nach einem der Ansprüche 1 bis 13, **dadurch gekennzeichnet, daß** zumindest die den Elektrolumineszenz-Schichtaufbau tragende Seite des Trägers (1) eine isolierende, transparente, die Flachkondensatoranordnung mechanisch schützende Abdeckung (18) aufweist.

15. Schild nach Anspruch 14, **dadurch gekennzeichnet, daß** die transparente Abdeckung (18) feuchtigkeitsdicht ist.

16. Schild nach Anspruch 14 oder 15, **dadurch gekennzeichnet, daß** die transparente Abdeckung (18) von einer Kunststofffolie gebildet wird.

17. Schild nach einem der Ansprüche 14 bis 16, **dadurch gekennzeichnet, daß** die transparente Abdeckung (18) retro-reflektierende Bestandteile enthält.

18. Schild nach Anspruch 16 oder 17, **dadurch gekennzeichnet, daß** die die transparente Abdeckung (18) bildende Kunststofffolie mit überstehenden Seitenbereichen des Trägers feuchtigkeitsdicht verbunden ist.

19. Schild nach einem der vorhergehenden Ansprühe, **dadurch gekennzeichnet, daß** in wenigstens einen Flachkondensator wenigstens ein Farbfilter zur Veränderung des Spektrums der durch die Pigmente der Pigmentschicht (16) vorgegebenen Leuchtfarbe eingebaut ist.

20. Schild nach einem der vorhergehenden Ansprüche, **dadurch gekennzeichnet, daß** eine das von der Pigmentschicht (16) in Richtung der Basiselektrode (7) abgestrahlte Licht reflektierende Schicht vorgesehen ist.

21. Schild nach Anspruch 20, **dadurch gekennzeichnet, daß** die Isolationsschicht (15) gleichzeitig als reflektierende Schicht dient.

## Claims

1. A plate, in particular a motor vehicle licence plate, which comprises a carrier (1) of a plastically deformable material and an electroluminescence layer structure for forming at least one flat capacitor which has a base electrode (7), an insulating layer (15), a pigment layer (16) which lights up in operation and a transparent cover electrode (17), **characterised in that** applied to the carrier (1) is a further insulating layer (3a) over which is arranged an electrically conducting layer (3b) from which the base electrode (7) and at least one feed-in line (10), which is electrically separated from the base electrode, for the cover electrode (17) of the at least one flat capacitor are produced.

2. A plate according to claim 1 **characterised in that** the further insulating layer (3a) is a plastic film which is firstly covered throughout with an electrically conducting material on the side remote from the carrier (1).

3. A plate according to claim 2 **characterised in that** the plastic film has at least one tongue (5) which projects beyond the carrier (1) and on which are provided the connecting lines (8, 9) required for contacting of the base electrode (7) and the feed-in line (10).

4. A plate according to claim 3 **characterised in that** the base electrode (7) and the feed-in line (10), which is electrically separate therefrom, of the at least one flat capacitor and the connecting lines (8, 9) which are connected to them are produced from the electrically conducting material by an etching process.

5. A plate according to one of the preceding claims **characterised in that** the electrically conducting material is copper.

6. A plate according to one of the preceding claims **characterised in that** the carrier (1) comprises metal.

7. A plate according to one of the preceding claims **characterised in that** the electroluminescence layer structure has a plurality of flat capacitors.

8. A plate according to claim 7 **characterised in that** at least two of the flat capacitors are actuable independently of each other.

9. A plate according to claim 7 or claim 8 **characterised in that** at least two of the flat capacitors have a common cover electrode (17).

10. A plate according to claim 8 or claim 9 **characterised in that** at least two flat capacitors have mutually electrically separated base electrodes, by means of which they are actuable independently of each other.

11. A plate according to one of claims 7 to 10 **characterised in that** provided for separate cover electrodes of at least two flat capacitors is a respective separate feed-in line.

12. A plate according to one of claims 3 to 11 **characterised in that** each of the connecting conductor tracks (8, 9) is connected by a solder connection to a wire of a power supply line.

13. A plate according to one of claims 3 to 11 **characterised in that** each of the connecting conductor tracks (8, 9) is connected by a crimp connection to a wire of a power supply line.

14. A plate according to one of claims 1 to 13 **characterised in that** at least the side of the carrier (1), which carries the electroluminescence layer structure, has an insulating transparent cover (18) for mechanically protecting the flat capacitor arrangement.

15. A plate according to claim 14 **characterised in that** the transparent cover (18) is moisture-tight.

16. A plate according to claim 14 or claim 15 **characterised in that** the transparent cover (18) is formed by a plastic film.

17. A plate according to one of claims 14 to 16 **characterised in that** the transparent cover (18) contains retroreflecting components.

18. A plate according to claim 16 or claim 17 **characterised in that** the plastic film forming the transparent cover (18) is connected in moisture-tight relationship to projecting side regions of the carrier.

19. A plate according to one of the preceding claims **characterised in that** provided in at least one flat capacitor is at least one colour filter for changing the spectrum of the light colour predetermined by the pigments of the pigment layer (16).

20. A plate according to one of the preceding claims **characterised in that** there is provided a layer for reflecting the light emitted by the pigment layer (16) in the direction of the base electrode (7).

21. A plate according to claim 20 **characterised in that** the insulating layer (15) serves at the same time as a reflecting layer.

## Revendications

1. Plaque, notamment plaque d'immatriculation d'un véhicule automobile, comprenant un support (1) en un matériau plastique déformable et une structure en couches électroluminescente, pour former au moins un condensateur plat qui comporte une électrode de base (7), une couche isolante (15), une couche pigmentée (16) lumineuse en fonctionnement et une électrode de recouvrement transparente (17), **caractérisée en ce que**, sur le support (1), est appliquée une couche isolante supplémentaire (3a) sur laquelle est disposée une couche électriquement conductrice (3b), à partir de laquelle sont façonnées l'électrode de base (7) et au moins une conduite d'alimentation (10) électriquement isolée de cette dernière pour l'électrode de recouvrement (17) du au moins un condensateur plat.

2. Plaque selon la revendication 1, **caractérisée en ce que** la couche isolante supplémentaire (3a) est un film en matière plastique recouvert tout d'abord en continu sur la face opposée au support (1) d'un matériau conducteur d'électricité.

3. Plaque selon la revendication 2, **caractérisée en ce que** le film en matière plastique comporte tout d'abord une languette (5) saillante par-dessus le support (1) sur laquelle les conduites de raccordement (8, 9) nécessaires pour la mise en contact de l'électrode de base (7) et de la conduite d'alimentation (10) sont conçues.

4. Plaque selon la revendication 3, **caractérisée en ce que** l'électrode de base (7) et la conduite d'alimentation (10) électriquement isolée de cette dernière dudit au moins un condensateur plat, ainsi que les conduites de raccordement (8, 9) qui y sont reliées sont façonnées par procédé d'enlevage à partir du matériau conducteur d'électricité.

5. Plaque selon l'une quelconque des revendications précédentes, **caractérisée en ce que** le matériau conducteur d'électricité est du cuivre.

6. Plaque selon l'une quelconque des revendications précédentes, **caractérisée en ce que** le support (1) est en métal.

7. Plaque selon l'une quelconque des revendications précédentes, **caractérisée en ce que** la structure en couches électroluminescente comprend plusieurs condensateurs plats.

8. Plaque selon la revendication 7, **caractérisée en ce qu'**au moins deux parmi les condensateurs plats sont pilotables de façon indépendante l'un par rapport à l'autre.

9. Plaque selon la revendication 7 ou 8, **caractérisée en ce qu'**au moins deux parmi les condensateurs plats sont munis d'une électrode de recouvrement commune (17).

10. Plaque selon la revendication 8 ou 9, **caractérisée en ce qu'**au moins deux condensateurs plats comportent des électrodes de base électriquement isolées entre elles, à l'aide desquelles ils sont pilotables de façon indépendante l'un par rapport à l'autre.

11. Plaque selon l'une quelconque des revendications 7 à 10, **caractérisée en ce qu'**une conduite d'alimentation respective séparée est prévue pour des électrodes de recouvrement isolées d'au moins deux condensateurs plats.

12. Plaque selon l'une quelconque des revendications 3 à 11, **caractérisée en ce que** chacune des pistes conductives de raccordement (8, 9) est reliée par liaison soudée avec un brin d'une conduite d'alimentation électrique.

13. Plaque selon l'une quelconque des revendications 3 à 11, **caractérisée en ce que** chacune des pistes conductives de raccordement (8, 9) est reliée par sertissage avec un brin d'une conduite d'alimentation électrique.

14. Plaque selon l'une quelconque des revendications 1 à 13, **caractérisée en ce qu'**au moins la face du support (1) qui porte la structure en couches électroluminescente comporte un recouvrement (18) isolant, transparent, assurant la protection mécanique de l'agencement de condensateurs plats.

15. Plaque selon la revendication 14, **caractérisée en ce que** le recouvrement transparent (18) est étanche à l'humidité.

16. Plaque selon la revendication 14 ou 15, **caractérisée en ce que** le recouvrement transparent (18) est formé par un film en matière plastique.

17. Plaque selon l'une quelconque des revendications 14 à 16, **caractérisée en ce que** le recouvrement transparent (18) contient des éléments rétro-réfléchissants.

18. Plaque selon la revendication 16 ou 17, **caractérisée en ce que** le film en matière plastique formant le recouvrement transparent (18) est relié de façon étanche à l'humidité à des zones latérales saillantes du support.

19. Plaque selon l'une quelconque des revendications précédentes, **caractérisé en ce que** dans au moins un condensateur plat, au moins un filtre coloré est intégré, pour la modification du spectre de la couleur fluorescente prédéfinie par les pigments de la couche pigmentée (16).

20. Plaque selon l'une quelconque des revendications précédentes, **caractérisée en ce qu'**on a prévu une couche réfléchissant la lumière diffusée par la couche pigmentée (16) en direction de l'électrode de base (7).

21. Plaque selon la revendication 20, **caractérisée en ce que** la couche isolante (15) fait simultanément office de couche réfléchissante.
